# EUROPÄISCHE PATENTANMELDUNG

(11) **EP 1 528 064 A1**
(43) Veröffentlichungstag der Anmeldung: **04.05.2005**
(21) Anmeldenummer: 04021172.4
(22) Anmeldetag: 07.09.2004
(51) Int. Cl.: C07F 9/40

(54) **Verfahren zur Herstellung eines Alkenylphosphonsäure-Derivats**

(30) Priorität: 30.10.2003 DE 10350674
(71) Anmelder: BASF AKTIENGESELLSCHAFT, 67056 Ludwigshafen (DE)
(72) Erfinder: Kessinger, Roland Dr., 69469 Weinheim (DE); Arndt, Jan-Dirk Dr, 68167 Mannheim (DE); Henkelmann, Jochem Dr, 68165 Mannheim (DE); Thomas, Florian Dr, 67063 Ludwigshafen (DE)

(57) **Zusammenfassung**

Verfahren zur Herstellung eines Alkenylphosphonsäure-Derivats durch Umsetzung eines Phosphonsäure-Derivats mit einem Alkin in Gegenwart eines Komplexkatalysator-Systems, wobei das Komplexkatalysator-System
(a) Nickel,
(b) ein Phosphin mit mindestens zwei dreibindigen Phosphoratomen und zusätzlich
(c) ein Phosphin mit einem dreibindigen Phosphoratom
enthält.

## Beschreibung

Die vorliegende Erfindung betrifft ein Verfahren zur Herstellung eines Alkenylphosphonsäure-Derivats durch Umsetzung eines Phosphonsäure-Derivats mit einem Alkin in Gegenwart eines Komplexkatalysator-Systems.

Vinylphosphonsäure-Derivate, insbesondere Vinylphosphonsäuredialkylester, sind als Vorprodukte für die Herstellung von Vinylphosphonsäuren sowie als Monomere zur Copolymerisation für die Herstellung von Klebstoffen und flammfesten Kunststoffen von Bedeutung.

Zu ihrer Herstellung sind unterschiedliche Verfahren bekannt.

Das in der Offenlegungsschrift DE-OS 21 32 962 beschriebene Verfahren geht von Ethylenoxid und Phosphortrichlorid aus. Das primär erhaltene Umsetzungsprodukt Tris-(2-chlorethyl)-phosphit wird bei 140 bis 200°C zu 2-Chlorethanphosphonsäure- bis(2-chlorethylester) umgelagert und sodann in Gegenwart eines Katalysators mit Phosgen zu 2-Chlorethanphosphonsäuredichlorid und Vinylphosphonsäuredichlorid umgesetzt. Als Katalysatoren kommen Amine, heterocyclische Stickstoffverbindungen und Phosphine sowie Phosphinoxide zum Einsatz.

In EP 32 663 A2 ist ein Verfahren zur Herstellung von Vinylphosphonsäure-Derivaten beschrieben, bei dem 2-Acetoxyethanphosphonsäuredialkylester in Gegenwart saurer oder basischer Katalysatoren gespalten werden. Als basische Katalysatoren werden tertiäre Amine und Phosphine, Ammoniumsalze oder Phosphoniumsalze, heterocyclische Verbindungen und Säureamide vorgeschlagen. Nachteil des Verfahrens ist die Bildung eines Gemisches von Vinylphosphonsäure-Derivaten. Der Anteil an Vinylphosphonsäuredialkylestern beträgt maximal 23 %.

Eine verbesserte Variante dieses Verfahrens gemäß DE 31 20 437 A1 beinhaltet die Umsetzung des erhaltenen Produktgemisches mit Carbonsäureorthoestern zu Vinylphosphonsäuredialkylestern.

Nachteile der vorstehenden Verfahren sind die Bildung von Produktgemischen, aufwendige, mehrstufige Syntheseverfahren, der erforderliche Einsatz hoher Umsetzungstemperaturen und der Einsatz chlorierter Ausgangsverbindungen. Insbesondere der große Nebenproduktanteil verschlechtert die Verfahrensökonomie beträchtlich.

Eine weitere Syntheseroute zur Herstellung von Alkenylphosphonsäurediestern ist die Addition von Alkinen an Phosphonsäurediestern in Gegenwart eines Palladium-Komplexkatalysators. Vorteil dieser Syntheseroute ist eine reine Additionsreaktion ohne Bildung stöchiometrischer Mengen an Neben- oder Koppelprodukten.

US 5,693,826 und WO 98/46613 offenbaren die Addition in Gegenwart eines Palladium-Komplexkatalysators mit Phosphinen und Phosphiten als Liganden bei Temperaturen kleiner gleich 100°C.

In WO 99/67259 und US 6,111,127 werden als Liganden zweizähnige Phosphine genannt.

Nachteilig bei diesen Verfahren ist der Einsatz teuerer Edelmetallkatalysatoren.

Das US-Patent 3,673,285 beschreibt die Addition von Alkinen an Phosphonsäurediestern unter Bildung von Alkenylphosphonsäurediestern bei Temperaturen von 130 bis 200°C in Gegenwart von Nickel-Komplexkatalysatoren aus der Reihe Dicarbonyl- bis(triphenylphosphino)-nickel(0), Bis(tris(hydroxymethyl)phosphino)-nickel(II)-chlorid, Bis(tri-n-butylphosphino)-nickel(II)-bromid und Tetracarbonyl-nickel(0). Bei der Addition von Ethin an Phosphorigsäurediethylester (Diethylphosphit) wurde in Gegenwart von Bis(tri-n-butylphosphino)-nickel(II)-bromid eine Aubeute an Vinylphosphonsäuredieethylester von 40 % erreicht (Beispiel 15). Nachteile dieses Verfahrens sind eine geringe Ausbeute von deutlich unter 50 % und die erforderliche hohe Reaktionstemperatur von bis zu 200°C, welche zu einer exothermen Zersetzung der Phosphonsäureethylester führt.

EP-A1-1 203 773 (BASF Aktiengesellschaft) beschreibt ein Verfahren zur Herstellung von Alkenylphosphonsäure-Derivaten durch Umsetzung von Phosphonsäure-Derivaten mit Alkinen in Gegenwart eines Komplexkatalysator-Systems, wobei man ein Komplexkatalysator-System verwendet, welches (a) Nickel und (b) ein Phosphin mit mindestens zwei dreibindigen Phosphoratomen enthält.

Nachteilig an diesem Verfahren ist die benötigte Menge an Phosphinen mit mindestens zwei dreibindigen Phosphoratomen (2:1 molar bezogen auf Ni), da diese Phosphine zunächst aufwändig aus entsprechenden Phosphinen mit einem dreibindigen Phosphoratom hergestellt werden müssen.

Eine parallele BASF-Patentanmeldung mit gleichem Anmeldetag betrifft ein Verfahren zur Herstellung eines Alkenylphosphonsäure-Derivats durch Umsetzung eines Phosphonsäure-Derivats mit einem Alkin in Gegenwart eines Komplexkatalysator-Systems, wobei das Komplexkatalysator-System (a) Nickel und (b) ein Phosphin mit mindestens zwei dreibindigen Phosphoratomen und/oder (c) ein Phosphin mit einem dreibindigen Phosphoratom enthält und die Zugabe des Alkins erst erfolgt, nachdem das Phosphonsäure-Derivat für mindestens eine Minute mit dem Komplexkatalysator-System in Kontakt gebracht wurde.

Es bestand die Aufgabe, ein Verfahren zur Herstellung von Alkenylphosphonsäure-Derivaten zu finden, welches die Nachteile des Stands der Technik überwindet, keine Koppelprodukte bildet, eine Reaktionstemperatur von deutlich unterhalb 200°C erlaubt, eine hohe Ausbeute von deutlich über 50 %, insbesondere über 75 %, ermöglicht, ohne Einsatz eines teueren Edelmetallkatalysators auskommt und gegenüber EP-A1-1 203 773 reduzierte Katalysatorkosten aufweist.

Demgemäß wurde ein Verfahren zur Herstellung eines Alkenylphosphonsäure-Derivats durch Umsetzung eines Phosphonsäure-Derivats mit einem Alkin in Gegenwart eines Komplexkatalysator-Systems gefunden, welches dadurch gekennzeichnet ist, dass das Komplexkatalysator-System
(a) Nickel,
(b) ein Phosphin mit mindestens zwei dreibindigen Phosphoratomen und zusätzlich
(c) ein Phosphin mit einem dreibindigen Phosphoratom
enthält.

Wesentlich beim erfindungsgemäßen Verfahren ist also die Gegenwart eines Komplexkatalysator-Systems, welches (a) Nickel und (b) ein Phosphin mit mindestens zwei dreibindigen Phosphoratomen und zusätzlich (c) ein Phosphin mit einem dreibindigen Phosphoratom enthält.

Das Nickel (a) liegt im Komplexkatalysator-System insbesondere in der Oxidationsstufe Null vor [= Ni(0)].

Im allgemeinen Sprachgebrauch werden Phosphine mit einem dreibindigen Phosphoratom als Monophosphine, Phosphine mit zwei dreibindigen Phosphoratomen als Diphosphine, Phosphine mit drei dreibindigen Phosphoratomen als Triphosphine, usw. bezeichnet.

Im Allgemeinen besitzen die beim erfindungsgemäßen Verfahren verwendeten Phosphine mit mindestens zwei dreibindigen Phosphoratomen die allgemeine Formel (I) 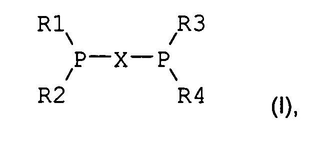 in der R¹, R², R³ und R⁴ jeweils unabhängig voneinander einen Kohlenstoff enthaltenden organischen Rest bedeuten und X für eine Kohlenstoff enthaltende organische Brückengruppe steht.

Unter einem Kohlenstoff enthaltenden organischen Rest ist ein unsubstituierter oder substituierter, aliphatischer, aromatischer oder araliphatischer Rest mit 1 bis 30 Kohlenstoffatomen zu verstehen. Dieser Rest kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, lod und/oder eine Cyanogruppe (bei dem Rest R handelt es sich hierbei ebenfalls um einen Kohlenstoff enthaltenden organischen Rest). Enthält der Kohlenstoff enthaltende organische Rest ein oder mehrere Heteroatome, so kann dieser auch über ein Heteroatom gebunden sein. Somit sind beispielsweise auch Ether-, Thioether- und tertiäre Aminogruppen eingeschlossen. Bei dem Kohlenstoff enthaltenden organischen Rest kann es sich um einen einwertigen oder auch mehrwertigen, beispielsweise zweiwertigen, Rest handeln.

Unter einer Kohlenstoff enthaltenden organischen Brückengruppe ist eine unsubstituierte oder substituierte, aliphatische, aromatische oder araliphatische zweiwertige Gruppe mit 1 bis 20 Kohlenstoffatomen und 1 bis 10 Atomen in der Kette zu verstehen. Die organische Brückengruppe kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder -PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, lod und/oder eine Cyanogruppe (bei dem Rest R handelt es sich hierbei ebenfalls um einen Kohlenstoff enthaltenden organischen Rest). Enthält die organische Brückengruppe ein oder mehrere Heteroatome, so kann diese auch jeweils über ein Heteroatom gebunden sein. Somit sind beispielsweise auch Ether-, Thioether- und tertiäre Aminogruppen eingeschlossen.

Bevorzugt setzt man beim erfindungsgemäßen Verfahren ein Phosphin (I) ein, bei dem die Reste R¹, R², R³ und R⁴ unabhängig voneinander für
* einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO- oder -NR-, ersetzt sein können und bei dem ein oder mehrere der Wasserstoffatome durch Substituenten, wie beispielsweise Arylgruppen ersetzt sein können;
* einen unsubstituierten oder substituierten aromatischen Rest mit einem Ring oder zwei oder drei kondensierten Ringen, bei dem eines oder mehrere Ringatome durch Heteroatome, wie beispielseise Stickstoff, substituiert sein können und bei dem ein oder mehrere der Wasserstoffatome durch Substituenten, wie beispielsweise Alkyl- oder Arylgruppen ersetzt sein können; oder bei dem die Reste R¹ zusammen mit R² und/oder R³ zusammen mit R⁴ für
* eine unsubstituierte oder substituierte, aliphatische, aromatische oder araliphatische Gruppe mit 3 bis 10 Atomen in der Kette;
stehen.

Als Beispiele der bevorzugten einwertigen Reste R¹, R², R³ und R⁴ seien Methyl, Ethyl, 1-Propyl, 2-Propyl (sek.-Propyl), 1-Butyl, 2-Butyl (sek.-Butyl), 2-Methyl-1-propyl (iso-Butyl), 2-Methyl-2-propyl (tert.-Butyl), 1-Pentyl, 2-Pentyl, 3-Pentyl, 2-Methyl-2-butyl (tert.-Amyl), 1-Hexyl, 2-Hexyl, 3-Hexyl, 2-Methyl-2-pentyl, 3-Methyl-3-pentyl, 2-Methoxy-2-propyl, Methoxy, Ethoxy, 1-Propoxy, 2-Propoxy (sek.-Propoxy), 1-Butoxy, 2-Butoxy (sek.-Butoxy), 2-Methyl-1-propoxy (iso-Butoxy), 2-Methyl-2-propoxy (tert.-Butoxy), 1-Pentoxy, 2-Pentoxy, 3-Pentoxy, 2-Methyl-2-butoxy (tert.-Amoxy), 1-Hexoxy, 2-Hexoxy, 3-Hexoxy, 2-Methyl-2-pentoxy, 3-Methyl-3-pentoxy, Phenyl, 2-Methylphenyl (o-Tolyl), 3-Methylphenyl (m-Tolyl), 4-Methylphenyl (p-Tolyl), 2,6-Dimethylphenyl, 2,4-Dimethylphenyl, 2,4,6-Trimethylphenyl, 2-Methoxyphenyl, 3-Methoxyphenyl, 4-Methoxyphenyl, 2-Pyridyl, 3-Pyridyl, 4-Pyridyl, 3-Pyridazinyl, 4-Pyridazinyl, 5-Pyridazinyl, 2-Pyrimidinyl, 4-Pyrimidinyl, 5-Pyrimidinyl, 2-Pyrazinyl, 2-(1,3,5-Triazin)yl, 1-Naphthyl, 2-Naphthyl, 2-Chinolyl, 8-Chinolyl, 1-Isochinolyl und 8-Isochinolyl genannt.

Als Beispiele der bevorzugten zweiwertigen Reste R¹ zusammen mit R² und/oder R³ zusammen mit R⁴ seien 1,4-Butylen, 1,4-Dimethyl-1,4-butylen, 1,1,4,4-Tetramethyl-1,4-butylen, 1,4-Dimethoxy-1,4-butylen, 1,4-Dimethyl-1,4-dimethoxy-1,4-butylen, 1,5-Pentylen, 1,5-Dimethyl-1,5-pentylen, 1,5-Dimethoxy-1,5-pentylen, 1,1,5,5-Tetramethyl-1,5-pentylen, 1,5-Dimethyl-1,5-dimethoxy-1,5-pentylen, 3-Oxa-1,5-pentylen, 3-Oxa-1,5-dimethyl-1,5-pentylen, 3-Oxa-1,5-dimethoxy-1 ,5-pentylen, 3-Oxa-1,1,5,5-tetramethyl-1,5-pentylen, 3-Oxa-1,5-dimethyl-1,5-dimethoxy-1,5-pentylen, 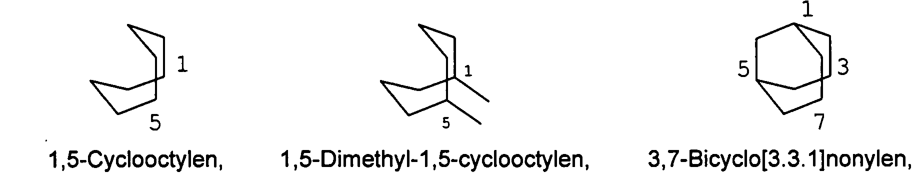 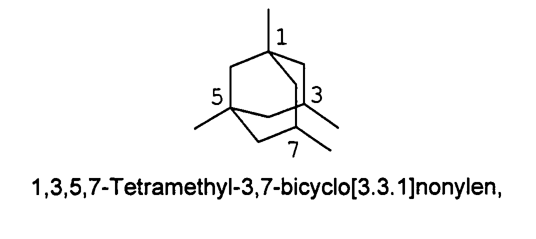 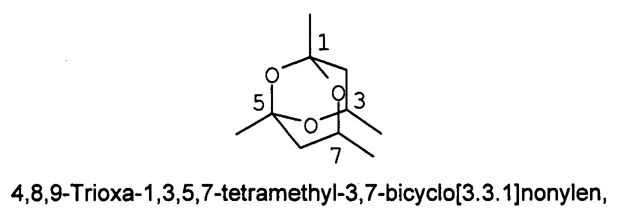 genannt.

Besonders bevorzugt setzt man beim erfindungsgemäßen Verfahren ein Phosphin (I) ein, bei dem R¹, R², R³ und/oder R⁴ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und lod gebunden ist, bedeuten; und/oder bei dem R¹, R², R³ und/oder R⁴ unabhängig voneinander einen unsubstituierten oder substituierten aromatischen Rest mit 6 Ringatomen, bei dem ein, zwei oder drei Ringatome durch Stickstoff substituiert sein können, bedeuten; und/oder bei dem R¹ zusammen mit R² und/oder R³ zusammen mit R⁴ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

Bei dem unsubstituierten oder substituierten C₃- bis C₁₂-Alkylrest, bei dem an das α-Kohlenstoffatom höchstens ein Atom aus der Reihe Wasserstoff, Fluor, Chlor, Brom und lod gebunden ist, handelt es sich um einen sogenannten, am α-Kohlenstoffatom verzweigten Alkylrest. Bevorzugt sind an das α-Kohlenstoffatom mindestens zwei weitere Kohlenstoffatome gebunden. Bei dem dritten, an das α-Kohlenstoffatom gebundene Atom handelt es sich bevorzugt um Wasserstoff, Kohlenstoff oder um ein Heteroatom, wie beispielsweise Sauerstoff, Stickstoff oder Schwefel. Als bevorzugte Beispiele seien 2-Propyl (sek.-Propyl), 2-Butyl (sek.-Butyl), 2-Methyl-2-propyl (tert.-Butyl), 2-Methyl-2-butyl (tert.-Amyl) und 2-Methoxy-2-propyl genannt.

Als bevorzugte Beispiele für einen unsubstituierten oder substituierten aromatischen Rest mit 6 Ringatomen, bei dem ein, zwei oder drei Ringatome durch Stickstoff substituiert sein können, seien Phenyl, 2-Methylphenyl (o-Tolyl), 3-Methylphenyl (m-Tolyl), 4-Methylphenyl (p-Tolyl), 2,6-Dimethylphenyl, 2,4-Dimethylphenyl, 2,4,6-Trimethylphenyl und 2-Pyridyl genannt.

Als bevorzugte Beispiele der zweiwertigen Reste R¹ zusammen mit R² und/oder R³ zusammen mit R⁴ seien 1,1,4,4-Tetramethyl-1,4-butylen, 1,4-Dimethyl-1,4-dimethoxy-1,4-butylen, 1,1,5,5-Tetramethyl-1,5-pentylen, 1,5-Dimethyl-1,5-dimethoxy-1,5-pentylen, 1,5-Dimethyl-1,5-cyclooctylen, 1,3,5,7-Tetramethyl-3,7-bicyclo[3.3.1]nonylen und 4,8,9-Trioxa-1,3,5,7-tetramethyl-3,7-bicyclo[3.3.1]nonylen genannt.

Ganz besonders bevorzugt setzt man beim erfindungsgemäßen Verfahren ein Phosphin (I) ein, bei dem die Reste R¹, R², R³ und R⁴ jeweils eine 2-Methyl-2-propyl-(tert.-Butyl-) oder eine Phenyl-Gruppe bedeuten.

Bevorzugt setzt man beim erfindungsgemäßen Verfahren ein Phosphin (I) ein, bei dem X für eine unsubstituierte oder substituierte, aliphatische, aromatische oder araliphatische Gruppe mit 1 bis 8 Atomen, bevorzugt 2 bis 4 Atomen, in der Kette und insgesamt nicht mehr als 20 Kohlenstoffatomen, steht. Bei der genannten Gruppe können eine oder mehrere der CH₂-Gruppen durch Heteroatome, wie etwa -O-, oder durch Heteroatom enthaltende Gruppen, wie etwa -CO- oder -NR-, und/oder eines oder mehrere der aromatischen Ringatome durch Heteroatome, wie etwa Stickstoff, substituiert sein.

Als Beispiele der bevorzugten Brückengruppe X seien 1,2-Ethylen, 1,3-Propylen, 1,2-Propylen, 1,4-Butylen, 2-Methyl-1,3-propylen, 1,5-Pentylen, 2,2-Dimethyl-1,3-propylen, 1,6-Hexylen, -O-CH₂CH₂-O-, -O-CH₂CH₂CH₂-O-, o-Phenylen, o-Xylylen (= ortho -CH₂-C₆H₄-CH₂-) oder 2,2'-Biphenylen genannt.

Besonders bevorzugt setzt man beim erfindungsgemäßen Verfahren ein Phosphin (I) ein, bei dem die Brückengruppe X für eine 1,2-Ethylen-, 1,3-Propylen-, 1,4-Butylen- oder o-Xylylen-Gruppe steht.

Ganz besonders bevorzugt setzt man beim erfindungsgemäßen Verfahren ein Phosphin (I) ein, bei dem die Reste R¹ bis R⁴ jeweils eine 2-Methyl-2-propyl- (tert.-Butyl-) oder eine Phenyl-Gruppe bedeuten und X für eine 1,2-Ethylen-, 1,3-Propylen-, 1,4-Butylen- oder o-Xylylen-Gruppe steht. Als ganz besonders bevorzugte Beispiele seien 1,2-Bis(di-tert.-butyl-phosphino)-ethan, 1,2-Bis(diphenylphosphino)-ethan, 1,3-Bis(di-tert.-butyl-phosphino)-propan, 1,3-Bis(diphenylphosphino)-propan, 1,4-Bis(di-tert.-butyl-phosphino)-butan, 1,4-Bis(diphenylphosphino)-butan, Bis(di-tert.-butyl-phosphino)-o-xylol und Bis(diphenylphosphino)-o-xylol, insbesondere 1,3-Bis(di-tert.-butyl-phosphino)-propan und 1,3-Bis(diphenylphosphino)-propan genannt.

Die Synthese von Diphosphinen ist allgemein bekannt und beispielsweise in L. Brandsma et al., "Application of Transition Metal Catalysts in Organic Synthesis", Springer-Verlag, Berlin 1997, Seiten 6 bis 9, beschrieben.

Im Allgemeinen handelt es sich bei dem zusätzlichen Phosphin mit einem dreibindigen Phosphoratom (c) im Ni-Komplexkatalysator-System um ein Phosphin der allgemeinen Formel (IV) 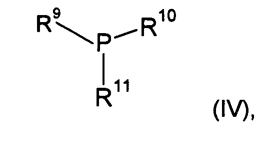 in der R⁹, R¹⁰, R¹¹ jeweils unabhängig voneinander einen Kohlenstoff enthaltenden organischen Rest bedeuten.

Unter einem Kohlenstoff enthaltenden organischen Rest ist ein unsubstituierter oder substituierter, aliphatischer, aromatischer oder araliphatischer Rest mit 1 bis 30 Kohlenstoffatomen zu verstehen. Dieser Rest kann ein oder mehrere Heteroatome, wie etwa Sauerstoff, Stickstoff, Schwefel oder Phosphor enthalten, beispielsweise -O-, -S-, -NR-, -CO-, -N=, -PR- und/oder-PR₂ und/oder durch eine oder mehrere funktionelle Gruppen, welche beispielsweise Sauerstoff, Stickstoff, Schwefel und/oder Halogen enthalten, substituiert sein, wie beispielsweise durch Fluor, Chlor, Brom, lod und/oder eine Cyanogruppe (bei dem Rest R handelt es sich hierbei ebenfalls um einen Kohlenstoff enthaltenden organischen Rest). Enthält der Kohlenstoff enthaltende organische Rest ein oder mehrere Heteroatome, so kann dieser auch über ein Heteroatom gebunden sein. Somit sind beispielsweise auch Ether-, Thioether- und tertiäre Aminogruppen eingeschlossen. Bei dem Kohlenstoff enthaltenden organischen Rest kann es sich um einen einwertigen oder auch mehrwertigen, beispielsweise zweiwertigen, Rest handeln.

Bevorzugt stehen R⁹, R¹⁰, R¹¹ (unabhängig von R¹⁻⁴) für Reste und Gruppen wie sie auch oben für R¹⁻⁴ definiert wurden.

Ganz besonders bevorzugt stehen R⁹, R¹⁰, R¹¹ für einen C₃₋₆-cycloaliphatischen und/oder aromatischen Rest wie Cyclohexyl oder Phenyl.

Bei dem Phosphin mit einem dreibindigen Phosphoratom (c) im Ni-Komplexkatalysator-System mit der allgemeinen Formel (IV) handelt es sich in einer bevorzugten Ausführungsform um Triphenylphosphin und/oder Tricyclohexylphosphin.

Beim erfindungsgemäßen Verfahren wird das Komplexkatalysator-System im Allgemeinen durch Zusammenfügen eines Ni(0)-Komplexes und den beiden Phosphinen (b, c), insbesondere den beiden Phosphinen gemäß den Formeln I und IV, oder durch Zusammenfügen einer Ni(II)-Verbindung, eines Reduktionsmittels und den beiden Phosphinen (b, c), insbesondere den beiden Phosphinen gemäß den Formeln I und IV, herstellt.

Da auch das jeweilige Phosphonsäure-Derivat als Reduktionsmittel wirken kann, ist das Komplexkatalysator-System auch durch Zusammenfügen einer Ni(II)-Verbindung und den beiden Phosphinen (b, c), insbesondere den beiden Phosphinen gemäß den Formeln I und IV, und einem Phosphonsäure-Derivat ohne weiteres Reduktionsmittel erhältlich.

Als Ni(0)-Komplexe sind bei Durchführung der erstgenannten Variante prinzipiell alle Ni-Komplexe geeignet, welche unter den Reaktionsbedingungen mit dem Phosphin unter Bildung des Komplexkatalysator-Systems reagieren. Als Beispiele geeigneter Ni-Komplexe seien Tetracarbonyl-nickel, Bis(cycloocta-1,5-dien)nickel und (Cyclododeca-1,5,9-trien)nickel genannt.

Die für die zweitgenannte Variante erforderlichen Ni(II)-Verbindungen können anorganischer, organischer oder gemischter Natur sein. Als Beispiele seien Nickel(II)-halogenide (z.B. NiCl₂), Nickel(II)-sulfat, Nickel(II)-acetylacetonat, 1,3-Bis(diphenyl-phosphino)-propan-nickel(II)-chlorid, Hexammin-nickel(II)-chlorid, Nickel(II)-bromid · Diethylenglykoldimethylether-Komplexe, Dimethylnickel(II)-Komplexe (CH₃)₂NiL₂ (L = z.B. Triphenylphosphin, Triethylphosphin, Tributylphosphin) und Dimethylnickel(II)-Komplexe (CH₃)₂NiL (L = z.B. Tetramethylethylendiamin (TMEDA), Bis(diphenylphosphino)propan, Bis(diphenylphosphino)butan) genannt. Geeignete Reduktionsmittel sind beispielsweise elementares Zink, Trialkylbor-Verbindungen, Trialkylaluminium-Verbindungen, Diisobutylaluminiumhydrid und Phosphonsäure=Derivate.

Das Komplexkatalysator-System kann in einem separaten Schritt vor der eigentlichen Alkenylierung des Phosphonsäure-Derivats als auch in-situ durch Zusammenfügen der genannten Komponenten hergestellt werden.

Die Temperatur bei der Herstellung des Komplexkatalysator-Systems beträgt im Allgemeinen 30 bis 120°C, bevorzugt 60 bis 110°C.

Als Lösungsmittel kann im Allgemeinen das Phosphonsäure-Derivat, sofern dies unter den Reaktionsbedingungen flüssig ist, eingesetzt werden. Es ist aber auch möglich und gegebenenfalls vorteilhaft, das Komplexkatalysator-System in Gegenwart eines weiteren, inerten Lösungsmittels herzustellen. Vorzugsweise setzt man dann die selben Lösungsmittel ein, welche auch als Lösungsmittel für die Alkenylierungsreaktion eingesetzt werden können und weiter unten beschrieben sind.

Beim erfindungsgemäßen Verfahren setzt man im Allgemeinen ein Molverhältnis zwischen den beiden Phosphinen (in molarer Summe) und dem Nickel des Komplexkatalysator-Systems von 0,5 bis 6, bevorzugt von 1 bis 4 und besonders bevorzugt von 2,5 bis 3,5 ein.

Das Molverhältnis zwischen dem Nickel des Komplexkatalysator-Systems und dem Phosphor des Phosphonsäure-Derivats und den daraus entstandenen Produkten beträgt beim erfindungsgemäßen Verfahren im Allgemeinen 0,01 bis 10 %, bevorzugt 0,05 bis 5 % und besonders bevorzugt 0,05 bis 3 %.

Das Molverhältnis Nickel : (Phosphin mit mindestens zwei dreibindigen Phosphoratomen) : (Phosphin mit einem dreibindigen Phosphoratom) beträgt bevorzugt 1 : (0,5-2) : (1-4), insbesondere 1 : (1-1,3) : (1,5-2).

Das erfindungsgemäße Verfahren kann bei einer Temperatur von 0 bis 200°C, bevorzugt 20 bis 150°C, besonders bevorzugt 50 bis 120°C, insbesondere 50 bis 100°C, durchgeführt werden.

Es erfolgt im Allgemeinen bei einem Druck von 0,01 bis 5 MPa abs., bevorzugt 0,05 bis 2,5 MPa abs., besonders bevorzugt 0,05 bis 0,14 MPa abs., insbesondere bei Atmosphärendruck.

Das erfindungsgemäße Verfahren kann in Abwesenheit eines zusätzlichen Lösungsmittels ("lösungsmittelfrei") oder in Gegenwart eines inerten Lösungsmittels durchgeführt werden. Als inerte Lösungsmittel sind Lösungsmittel zu verstehen, welche unter den eingestellten Reaktionsbedingungen chemisch nicht mit den eingesetzten Verbindungen reagieren. Geeignete inerte Lösungsmittel sind beispielsweise Tetrahydrofuran, 1,4-Dioxan, N-Methyl-pyrrolidon, N-Methyl-piperidon, Dimethylsulfoxid, Toluol, Xylol, Glykolether (wie z.B. 1,2-Dimethoxyethan (Ethylenglykoldimethylether), Bis(2-methoxyethyl)-ether (Diethylenglykoldimethylether), Triethylenglykoldimethylether oder Tetraethylenglykoldimethylether), Dimethylformamid, Dimethylformanilid, Chlorbenzol und deren Gemische. Der Zusatz eines inerten Lösungsmittels kann beispielsweise beim Einsatz höhermolekularer, zähflüssiger oder unter Reaktionsbedingungen fester Phosphonsäure-Derivate von Vorteil sein.

Es ist gegebenenfalls von Vorteil, das erfindungsgemäße Verfahren in Gegenwart eines sogenannten Radikalinhibitors als Additiv durchzuführen. Als Radikalinhibitoren prinzipiell geeignet sind die allgemein technisch üblichen Inhibitoren, wie beispielsweise N,N'-Bis(1-methylpropyl)-1,4-phenylendiamin, 2,6-Di-tert.-butyl-4-methyl-phenol oder 1,2-Dihydroxybenzol (Brenzcatechin). Wird ein Radikalinhibitor eingesetzt, so wird in der Regel ein Molverhältnis zwischen dem Radikalinhibitor und dem Phosphor des Phosphonsäure-Derivats und den daraus entstandenen Produkten von 0,01 bis 10 %, bevorzugt 0,05 bis 5 % und besonders bevorzugt 0,5 bis 3 % eingestellt.

Die beim erfindungsgemäßen Verfahren einzusetzenden Phosphonsäure-Derivate sind allgemein bekannt und besitzen zum Beispiel die Formel (II) 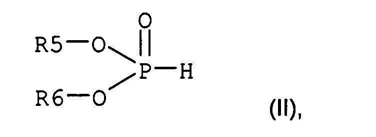 in der R⁵ und R⁶ jeweils unabhängig voneinander ein Kohlenstoff enthaltender organischer Rest bedeutet. Zur Definition des Begriffs "Kohlenstoff enthaltender organischer Rest" wird auf die obige Ausführung bei der Definition der Reste R¹ bis R⁴ der Formel (I) verwiesen.

Bevorzugt stehen R⁵, R⁶ (unabhängig von R¹⁻⁴) für Reste und Gruppen wie sie auch oben für R¹⁻² definiert wurden.

Phosphonsäure-Derivate der Formel (II) werden im Allgemeinen durch Umsetzung von Phosphortrichlorid mit den entsprechenden Alkoholen und/oder den entsprechenden Phenolen hergestellt. Weitere Einzelheiten sind beispielsweise Ullmann's Encyclopedia of Industrial Chemistry, 6^{th} edition, 1999 Electronic Release, Chapter "Phosphorous Compounds, Organic - Phosphites and Hydrogenphosphonates", zu entnehmen.

Bevorzugt setzt man beim erfindungsgemäßen Verfahren ein Phosphonsäure-Derivat (II) ein, bei dem die Reste R⁵ und R⁶ unabhängig voneinander für
* einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO - oder -NR-, ersetzt sein können und bei dem ein oder mehrere der Wasserstoffatome durch Substituenten, wie beispielsweise Aryl (z.B. Phenyl), Alkyl (z.B. C₁₋₁₀-Alkyl), Hydroxyalkyl (z.B. C₁₋₁₀-Hydroxyalkyl), Halogenalkyl (z.B. C₁₋₁₀-Halogenalkyl), Acetoxyalkyl (z.B. Acetoxy-C₁₋₁₀-alkyl), ersetzt sein können;
* einen unsubstituierten oder substituierten aromatischen Rest mit einem Ring oder zwei oder drei kondensierten Ringen, bei dem eines oder mehrere Ringatome durch Heteroatome, wie beispielsweise Stickstoff, substituiert sein können und bei dem ein oder mehrere der Wasserstoffatome durch Substituenten, wie beispielsweise Alkyl- oder Arylgruppen ersetzt sein können;
   oder bei dem die Reste R⁵ zusammen mit R⁶ für
* einen unverzweigten oder verzweigten, acyclischen oder cyclischen, unsubstituierten oder substituierten C₄- bis C₂₀-Alkylenrest mit 4 bis 10 Atomen in der Alkylenkette, bei dem CH₂-Gruppen auch durch Heterogruppen, wie beispielsweise -CO-, -O- oder -NR- ersetzt sein können und bei dem ein oder mehrere der Wasserstoffatome durch Substituenten, wie beispielsweise Arylgruppen ersetzt sein können;
stehen.

Als Beispiele der bevorzugten Reste R⁵ und R⁶ seien
* C₁- bis C₁₂-Alkyl, besonders bevorzugt Methyl, Ethyl, 1-Propyl, 2-Propyl, 1-Butyl, 2-Butyl, 2-Methyl-1-propyl, 2-Methyl-2-propyl, 1-Pentyl, 1-Hexyl, 1-Octyl, 2-Ethyl-1-hexyl, 1-Decyl und 1-Dodecyl;
* C₆- bis C₁₀-Aryl, besonders bevorzugt Phenyl;
* C₇- bis C₁₀-Aralkyl, besonders bevorzugt Phenylmethyl; und
* C₇- bis C₁₀-Alkaryl, besonders bevorzugt 2-Methylphenyl, 3-Methylphenyl und 4-Methylphenyl;
genannt.

Ganz besonders bevorzugt setzt man beim erfindungsgemäßen Verfahren als Phosphonsäure-Derivate den Dimethylester, den Diethylester, den Dipropylester, den Dibutylester, den Di-(2-ethylhexyl)-ester oder den Diphenylester der Phosphonsäure ein.

Die beim erfindungsgemäßen Verfahren einzusetzenden Alkine besitzen die Formel (III)

R7-C≡C-R8 (III),

in der R⁷ und R⁸ jeweils unabhängig voneinander Wasserstoff oder ein Kohlenstoff enthaltender organischer Rest bedeutet. Optional können R⁷ und R⁸ auch miteinander verbunden sein. Zur Definition des Begriffs "Kohlenstoff enthaltender organischer Rest" sei auf die obige Ausführung bei der Definition der Reste R¹ bis R⁴ der Formel (I) verwiesen.

Bevorzugt stehen R⁷, R⁸ (unabhängig von R¹⁻⁴) für Reste und Gruppen wie sie auch oben für R¹⁻² definiert wurden.

Bevorzugt setzt man beim erfindungsgemäßen Verfahren ein Alkin (III) ein, bei dem die Reste R⁷ und R⁸ unabhängig voneinander für
* Wasserstoff (H);
* einen unverzweigten oder verzweigten, acyclischen oder cyclischen, unsubstituierten oder substituierten Alkylrest mit 1 bis 20 aliphatischen Kohlenstoffatomen, bei dem eine oder mehrere der CH₂-Gruppen auch durch Heteroatome, wie -O-, oder durch Heteroatom enthaltende Gruppen, wie -CO - oder -NR-, ersetzt sein können und bei dem ein oder mehrere der Wasserstoffatome durch Substituenten, wie beispielsweise Arylgruppen ersetzt sein können;
* einen unsubstituierten oder substituierten aromatischen Rest mit einem Ring oder zwei oder drei kondensierten Ringen, bei dem eines oder mehrere Ringatome durch Heteroatome, wie beispielseise Stickstoff, substituiert sein können und bei dem ein oder mehrere der Wasserstoffatome durch Substituenten, wie beispielsweise Alkyl- oder Arylgruppen ersetzt sein können:
stehen.

Als Beispiele der bevorzugten Reste R⁷ und R⁸ seien
* Wasserstoff (H);
* C₁- bis C₁₀-Alkyl, besonders bevorzugt Methyl, Ethyl, 1-Propyl, 1-Butyl, 1-Pentyl und 1-Hexyl;
* C₆- bis C₁₀-Aryl, besonders bevorzugt Phenyl;
* C₇- bis C₁₀-Aralkyl, besonders bevorzugt Phenylmethyl; und
* C₇- bis C₁₀-Alkaryl, besonders bevorzugt 2-Methylphenyl, 3-Methylphenyl und 4-Methylphenyl;
genannt.

Ganz besonders bevorzugt setzt man beim erfindungsgemäßen Verfahren als Alkine Ethin oder Propin ein.

Ganz besonders bevorzugt ist beim erfindungsgemäßen Verfahren die Herstellung von Ethenylphosphonsäuredimethylester, Ethenylphosphonsäurediethylester, Ethenylphosphonsäuredi-n-propylester und Ethenylphosphonsäuredi-n-butylester.

Beim Einsatz von z.B. Phenylacetylen oder z.B. 1-Octin und Dimethylphosphit können entsprechend der folgenden Reaktionsgleichung drei isomere Alkenylphosphonsäurediester als Reaktionsprodukte gebildet werden (R' = Phenyl bzw. R' = n-Hexyl):

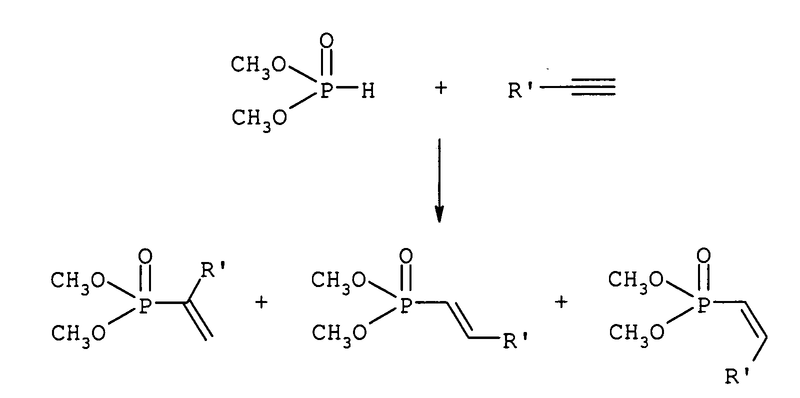

Das erfindungsgemäße Verfahren kann diskontinuierlich, halbkontinuierlich oder kontinuierlich durchgeführt werden.

In einer beispielhaften Ausführungsform zur diskontinuierlichen Durchführung werden die beiden Phosphine (b, c), insbesondere die beiden Phosphine gemäß den Formeln I und IV, der Ni-Komplex (beziehungsweise die Ni(II)-Verbindung und das Reduktionsmittel), das Phosphonsäure-Derivat, gegebenenfalls ein Lösungsmittel und gegebenenfalls ein Radikalinhibitor zusammengegegeben, vermischt und auf Reaktionsbedingung gebracht. Nach kurzer Zeit, im Allgemeinen nach 1 bis 60 Min, bevorzugt 5 bis 30 Min., wird das Alkin in die auf Reaktionsbedingungen gebrachte Reaktionsmischung zugegeben. Nach Beendigung der Reaktion wird das Reaktionsgemisch zur bevorzugt destillativen Aufarbeitung weitergeleitet und das gewünschte Alkenylphosphonsäure-Derivat isoliert.

In einer beispielhaften Ausführungsform zur halbkontinuierlichen Durchführung werden die beiden Phosphine (b, c), insbesondere die beiden Phosphine gemäß den Formeln I und IV, der Ni-Komplex (beziehungsweise die Ni(II)-Verbindung und das Reduktionsmittel), das Phosphonsäure-Derivat, gegebenenfalls ein Lösungsmittel und gegebenenfalls ein Radikalinhibitor zusammengegegeben, vermischt und auf Reaktionstemperatur gebracht. Das Alkin wird nun, bevorzugt nachdem die Reaktionsmischung kurze Zeit, im Allgemeinen 1 bis 60 Min, bevorzugt 5 bis 30 Min., auf Reaktionstemperatur gehalten wurde, bis zum Erreichen der gewünschten Menge kontinuierlich zugeführt. Vorteilhaft ist die Zugabe des Alkins, nachdem die beiden Phosphine (b, c), der Ni-Komplex (beziehungsweise die Ni(II)-Verbindung und das Reduktionsmittel) und das Phosphonsäure-Derivat zusammengegeben, vermischt und auf Reaktionsbedingungen gebracht wurden. Die Zufuhr kann in gasförmiger oder flüssiger Form erfolgen. Bei der Zugabe in flüssiger Form kann reines, flüssiges Alkin oder auch eine Lösung in einem Lösungsmittel eingesetzt werden. Nach Beendigung der Zufuhr an Alkin kann das Reaktionsgemisch noch eine weitere Zeit unter den Reaktionsbedingungen belassen werden. Nach Beendigung der Reaktion wird das Reaktionsgemisch zur bevorzugt destillativen Aufarbeitung weitergeleitet und das gewünschte Alkenylphosphonsäure-Derivat isoliert.

In einer beispielhaften Ausführungsform zur kontinuierlichen Durchführung werden die beiden Phosphine (b, c), insbesondere die beiden Phosphine gemäß den Formeln I und IV, der Ni-Komplex (beziehungsweise die Ni(II)-Verbindung und das Reduktionsmittel), gegebenenfalls ein Lösungsmittel und gegebenenfalls ein Radikalinhibitor zusammengegegeben, vermischt und auf Reaktionstemperatur gebracht. Das Phosphonsäure-Derivat und das Alkin werden nun kontinuierlich im gewünschten Verhältnis zudosiert. Im Allgemeinen wird das Phosphonsäure-Derivat in flüssiger Form, gegebenenfalls gelöst in einem Lösungsmittel, zugegeben. Die Zufuhr kann in gasförmiger oder flüssiger Form erfolgen. Bei der Zugabe in flüssiger Form kann reines, flüssiges Alkin oder auch eine Lösung in einem Lösungsmittel eingesetzt werden. Flüssiges Reaktionsgemisch wird kontinuierlich entfernt und das gebildete Alkenylphosphonsäure-Derivat in einer nachgeschalteten Stufe, beispielsweise destillativ oder extraktiv, isoliert. Gegebenenfalls werden auch höhersiedende Nebenprodukte abgetrennt. Das verbleibende Gemisch, welches hauptsächlich nicht-umgesetztes Phosphonsäure-Derivat und gegebenenfalls das eingesetzte Lösungsmittel enthält, kann gegebenenfalls wieder rückgeführt werden.

Das erfindungsgemäße Verfahren ermöglicht die Herstellung von Alkenylphosphonsäure-Derivaten bei einer Reaktionstemperatur von bevorzugt unterhalb 150°C ohne Einsatz eines teueren Edelmetallkatalysators in nur einem Syntheseschritt, ausgehend von einfach zugänglichen Ausgangsverbindungen. Da es sich um eine sehr selektive Additionsreaktion handelt, werden keine Koppelprodukte und nur eine geringe Menge an Nebenprodukten gebildet. Das erfindungsgemäße Verfahren erlaubt bei guter Verfahrensökonomie eine hohe Ausbeute von deutlich über 50 %, insbesondere über 75 %, bei gegenüber EP-A1-1 203 773 reduzierten Katalysatorkosten.

### Beispiele

### Beispiel 1

In einem Dreihalskolben, versehen mit Innenthermometer, Kühler und Gaseinleitungsrohr wurden 27,50 g Dimethylphosphit mit 27 ml Tetraethylenglykoldimethylether versetzt und unter Argon entgast. Nach Zugabe von 0,5 mol% Ni(acac)₂ und 0,5 mol% dppp (dppp = 1,3-Bis(diphenylphosphino)propan) und 1 Mol % Triphenylphosphin wurde die Reaktionslösung auf 100°C erhitzt und anschließend 10 Min. bei dieser Temperatur gerührt. Danach wurden 1,5 Stunden lang 8 l/h Acetylen bei 100°C und Atmosphärendruck in die Reaktionslösung eingeleitet. Nach destillativer Aufarbeitung wurde Vinylphosphonsäuredimethylester in 80 % Ausbeute isoliert.

### Beispiel 2 (Vergleichsbeispiel)

In einem Dreihalskolben, versehen mit Innenthermometer, Kühler und Gaseinleitungsrohr wurden 27,50 g Dimethylphosphit mit 27 ml Tetraethylenglykoldimethylether versetzt und unter Argon entgast. Nach Zugabe von 0,5 mol% Ni(acac)₂ und 1 mol% dppp wurde die Reaktionslösung auf 100°C erhitzt und anschließend 10 Min. bei dieser Temperatur gerührt. Danach wurden 1,5 Stunden lang 8 l/h Acetylen bei 100°C und Atmosphärendruck in die Reaktionslösung eingeleitet. Nach destillativer Aufarbeitung wurde Vinylphosphonsäuredimethylester in 80 % Ausbeute isoliert.

## Patentansprüche

1. Verfahren zur Herstellung eines Alkenylphosphonsäure-Derivats durch Umsetzung eines Phosphonsäure-Derivats mit einem Alkin in Gegenwart eines Komplexkatalysator-Systems, **dadurch gekennzeichnet, dass** das Komplexkatalysator-System
(a) Nickel,
(b) ein Phosphin mit mindestens zwei dreibindigen Phosphoratomen und zusätzlich
(c) ein Phosphin mit einem dreibindigen Phosphoratom
enthält.

2. Verfahren nach Anspruch 1, **dadurch gekennzeichnet, dass** das Molverhältnis Nickel : (Phosphin mit mindestens zwei dreibindigen Phosphoratomen) : (Phosphin mit einem dreibindigen Phosphoratom) 1 : (0,5-2) : (1-4) beträgt.

3. Verfahren nach den Ansprüchen 1 oder 2, **dadurch gekennzeichnet, dass** es sich bei dem Phosphin mit mindestens zwei dreibindigen Phosphoratomen (b) um ein Phosphin der allgemeinen Formel (I) 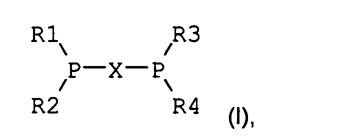 in der R¹, R², R³ und R⁴ jeweils unabhängig voneinander einen Kohlenstoff enthaltenden organischen Rest bedeuten und X für eine Kohlenstoff enthaltende organische Brückengruppe steht, handelt.

4. Verfahren nach Anspruch 3, **dadurch gekennzeichnet, dass** beim Phosphin (I) R¹, R², R³ und/oder R⁴ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und lod gebunden ist, bedeuten;
und/oder R¹, R², R³ und/oder R⁴ unabhängig voneinander einen unsubstituierten oder substituierten aromatischen Rest mit 6 Ringatomen, bei dem ein, zwei oder drei Ringatome durch Stickstoff substituiert sein können, bedeuten;
und/oder R¹ zusammen mit R² und/oder R³ zusammen mit R⁴ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

5. Verfahren nach einem der beiden vorhergehenden Ansprüche, **dadurch gekennzeichnet, dass** beim Phosphin (I) X für eine unsubstituierte oder substituierte, aliphatische, aromatische oder araliphatische Gruppe mit 1 bis 8 Atomen in der Kette und insgesamt nicht mehr als 20 Kohlenstoffatomen steht.

6. Verfahren nach einem der Ansprüche 3 bis 5, **dadurch gekennzeichnet, dass** beim Phosphin (I) R¹ bis R⁴ jeweils eine 2-Methyl-2-propyl- oder jeweils eine Phenyl-Gruppe bedeuten und X für eine 1,2-Ethylen-, 1,3-Propylen-, 1,4-Butylen - oder o-Xylylen-Gruppe steht.

7. Verfahren nach einem der vorhergehenden Ansprüche, **dadurch gekennzeichnet, dass** es sich bei dem Phosphin mit einem dreibindigen Phosphoratom (c) um ein Phosphin der allgemeinen Formel (IV) 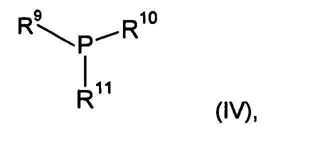 in der R⁹, R¹⁰ und R¹¹ jeweils unabhängig voneinander einen Kohlenstoff enthaltenden organischen Rest bedeuten, handelt.

8. Verfahren nach dem vorhergehenden Anspruch, **dadurch gekennzeichnet, dass** beim Phosphin (IV) R⁹, R¹⁰ und/oder R¹¹ unabhängig voneinander einen unsubstituierten oder substituierten C₃- bis C₁₂-Alkylrest, bei dem an das α-Kohlenstoffatom höchstens ein Atom aus der Reihe Wasserstoff, Fluor, Chlor, Brom und lod gebunden ist, bedeuten;
und/oder R⁹, R¹⁰ und/oder R¹¹ unabhängig voneinander einen unsubstituierten oder substituierten aromatischen Rest mit 6 Ringatomen, bei dem ein, zwei oder drei Ringatome durch Stickstoff substituiert sein können, bedeuten;
und/oder R⁹ zusammen mit R¹⁰ eine unsubstituierte oder substituierte, aliphatische, aromatische oder araliphatische Gruppe mit 4 bis 7 Atomen in der Kette und insgesamt nicht mehr als 30 Kohlenstoffatomen, bedeuten.

9. Verfahren nach einem der vorhergehenden Ansprüche, **dadurch gekennzeichnet, dass** man das Komplexkatalysator-System durch Zusammenfügen eines Ni(0)-Komplexes und den beiden Phosphinen (b, c) oder durch Zusammenfügen einer Ni(II)-Verbindung, eines Reduktionsmittels und den beiden Phosphinen (b, c) herstellt.

10. Verfahren nach einem der vorhergehenden Ansprüche, **dadurch gekennzeichnet, dass** man 0,01 bis 10 Mol.% Nickel des Komplexkatalysator-Systems bezogen auf das umzusetzende Phosphonsäure-Derivat einsetzt.

11. Verfahren nach einem der vorhergehenden Ansprüche, **dadurch gekennzeichnet, dass** man die Umsetzung bei einer Temperatur von 20 bis 150°C und einem Druck von 0,05 bis 2,5 MPa abs. durchführt.

12. Verfahren nach einem der vorhergehenden Ansprüche, **dadurch gekennzeichnet, dass** man als Phosphonsäure-Derivat den Dimethylester, den Diethylester, den Dipropylester, den Dibutylester, den Di-(2-ethylhexyl)-ester oder den Diphenylester der Phosphonsäure einsetzt.

13. Verfahren nach einem der vorhergehenden Ansprüche, **dadurch gekennzeichnet, dass** man als Alkine Ethin oder Propin einsetzt.

14. Verfahren nach einem der vorhergehenden Ansprüche zur Herstellung eines Vinylphosphonsäuredialkylesters durch Umsetzung eines entsprechenden Phosphonsäuredialkylesters mit Acetylen.
